# EUROPEAN PATENT APPLICATION

(11) **EP 4 414 418 A1**
(43) Date of publication of application: **14.08.2024**
(21) Application number: 24157391.4
(22) Date of filing: 13.02.2024
(51) Int. Cl.: C08J 11/14, C08J 11/16

(54) **PROCESS AND PLANT FOR RECYCLING TEXTILES**

(30) Priority: 13.02.2023 EP 23156251
(71) Applicant: Sanko Tekstil Isletmeleri San. Ve Tic. A.S., 16400 Inegol - Bursa (TR)
(72) Inventor: KONUKOGLU, Fatih, 16400 Inegol - BURSA (TR); LOYAN, Kenan, 16400 Inegol - BURSA (TR); HAMITBEYLI, Agamirze, 16400 Inegol - BURSA (TR); AGZIKARA, Seref, 16400 Inegol - BURSA (TR); KAPLAN, Gökhan, 16400 Inegol - BURSA (TR); ÖKTEM, Gözde, 16400 Inegol - BURSA (TR); ÇINAR, Hüseyin, 16400 Inegol - BURSA (TR); DOGANAY, Salih, 16400 Inegol - BURSA (TR); DEDE, Yavuz, 16400 Inegol - BURSA (TR); UZ, Hazel, 16400 Inegol - BURSA (TR)
(74) Representative: Gislon, Gabriele

(57) **Abstract**

A process of treatment of waste blend textiles comprising polyester fibers and cotton fibres depolymerizes polyester in a controlled environment to obtain treated textile comprising cotton staple fibers suitable to be recycled into cotton yarns.

## Description

### Field of the invention

The present invention relates to a process and a plant for recycling textiles. In greater detail, the present invention relates to a process for recycling textiles that contain cellulosic staple fibers and polyester. The process allows to remove polyester and to recover and recycle cellulosic staple fibers from polyester blend textiles, namely from textiles such as fabrics, garments, yarns and fibers containing polyester filaments or polyester fibers and cellulosic staple fibers, particularly cotton staple fibers.
The cotton and cellulosic fibers recovered according to the process are suitable to be used as staple fibers for yarn production without having to be dissolved and regenerated into man-made cellulosic fibers.

### State of the art

Recycling waste textiles, especially fabrics and used garments and apparels, has become a primary target in the textile industry. Waste textiles include pre-consumer fabrics such as scrap fabrics and yarns or filaments obtained in the manufacturing process of fabrics and garments and of yarns, defective fabrics, and post-consumer textiles such as used or defective garments and fabrics deriving from upholstery. New and efficient processes for recycling waste textiles are being actively researched.

One of the goals of the invention is to recover and recycle the cellulosic fibers, especially the cotton fibers of the yarns, and to recover as corresponding monomers the polyester that is present in blend fabrics and textiles, i.e. in fabrics and textiles that are commonly known as polycotton or polyester-cotton fabrics. Polycotton fabrics include yarns comprising cellulose staple fibers and polyester filaments or fibers. A blend fabric as defined in this application may comprise yarns containing cotton and polyester yarns and/or cotton yarns without polyester in combination with polyester yarns without cotton fibers. The yarns are woven or knitted into a fabric structure. A garment that is processed according to the invention, may include also non-fabric elements, usually made of metal or plastic materials, such as zippers, rivets, labels etcetera.

Methods of recycling polyester containing fabrics are known in the art. Some methods include de-polymerizing the polyester content in the fabric to obtain the starting monomers terephthalic acid (TPA) and ethylene glycol (EG). Known recycling processes of this type require a pre-cutting or a shredding process of the fabric before treating it with a depolymerizing solution. The final products include cellulose pulp, TPA and EG; TPA and EG may be used for production of polyester or for other uses.

WO 2019/140245 discloses a method and a system for recycling a polycotton fabric in which a shredded fabric is treated in an aqueous solution at a pH of 10-14 in subcritical conditions at a temperature of 105°C to 190°C and a pressure of 40 to 300 psi for a time of 0 to 90 minutes. The polyester component is depolymerized into TPA and EG, the cotton fibers are degraded into a cellulose pulp that is subsequently recycled by additional processing into man-made cellulosic fibers i.e. regenerated cellulose material including rayon, viscose, lyocell, or cellulose acetate.

The known processes have the drawback that they include costly and timeconsuming steps such as shredding the fabric before the depolymerization step and processing the cellulose pulp obtained at the end of the depolymerization step in order to obtain usable regenerated cellulose fibers after dissolution of the pulp and several additional processing steps. In particular, as discussed in the experimental section of the present application, the process of WO 2019/140245 results in a significant loss of the degree of polymerization (DP loss) of the cotton fibers; such a loss negatively affects to possibility of recycling the cotton fibers in a cotton yarn with known mechanical processes. Moreover, WO 2019/140245 teaches, see examples 7-8, that complete depolymerization of polyester in small portions of polycotton fabrics requires use of catalysts, this process resulting in a catalyst containing solution very difficult to be disposed or recycled, or requires use of MeOH as a co-solvent, this process resulting in a dramatic loss of DP in the cotton fibers of the fabric after depolymerization of the polyester.

An additional problem is that, as e.g. taught by WO2019/140245, known recycling processes of garments allow to recycle only part of the garment because the garment portion(s) having zippers, rivets, labels, buttons and similar elements is cut away from the garment before processing it. As an example, the upper part of a jeans, containing rivets and zippers, is removed from the garment so that only leg portions are recycled. This step results in a lower percentage of the garment's fabric that is recycled and in an additional processing cost.

It is thus an aim of the present invention to solve the above-mentioned drawbacks of the known processes of recycling polyester-cotton textiles and to provide a recycling process that provides a safe, low-cost, easy and environmentally clean way of recycling waste polyester-cotton textiles, fabrics, garments, yarns and fibers, by recovering cotton (or cellulosic) fibers in a state suitable to be used as such, i.e. as staple fibers, in the production of yarns. In other words, an aim of the invention is to mechanically recycle the cotton fibers into yarns.

Another aim of the invention is to avoid the step of treating the cellulose pulp resulting from the cotton (or cellulosic) staple fibers in the waste polyester-cotton fabrics. A further aim of the invention is to recycle a garment without previous removal of zippers and similar non-textile elements.

### Summary of the invention

The above aims of the invention are reached by means of the process according to independent claims 1 and 17, and by a plant according to independent claim 15. Textiles obtainable by the invention process are the object of claims 20 and 21. Preferred aspects of the invention are recited in the respective dependent claims.

The process is directed to the recycling of waste "blend textiles", i.e. to textiles that comprise both polyester and cotton, such as so-called "polycotton" textiles, or that contain polyester and other cellulosic fibres, different from cotton. Typically, polyester is in the form of filaments; it may also be in the form of staple polyester fibers, e.g. in a yarn. Polyester may also be in the form of sewing yarns used to sew together the parts of the garment to be treated. In view of the aim of the invention to recover the valuable cotton content in a re-usable form, preferably the amount of polyester in a textile according to the invention is 1% to 60% by weight of the weight of the textile, more preferably the amount of polyester is 4% to 50% by weight.

In an embodiment of the invention the process is directed to the recycling of garments in the form of "integral garment"; the wording "integral" garment is here used to define a garment that include non-textile elements such as buttons, rivets, zippers etcetera, as above discussed. The process for recycling garments is directed to garments made of or including blend textiles and also to garments in which the fabric is made of 100% cotton or cellulosic fibers and the polyester is only present as sewing lines or yarns used to sew together the parts of the garment.

The applicant found that by applying the process of the invention to garments having polyester sewing yarns it is possible to dissolve the said sewing lines so that the treated garment is reduced to detached parts. The detached parts obtained after the process include, e.g. in a jeans, trousers, parts such as pockets, legs and the non-textile parts (buttons, zippers, rivets etc.) that also become detached from the garment at the end of the process. Thus, after the process of the invention the non-textile parts can be removed from the treated garments to obtain a plurality of treated garment parts that are made of fabric consisting of cotton fibers (or of cellulosic fibers). The thus obtained cotton fabrics may thus be worked into loose cotton fibers, in ways known per se in the art, which are suitable to be recycled into cotton yarns by spinning and similar processes.

The term "textiles" is here referred to fabrics, garments, yarns and fibers. The fabric may be a woven fabric, a knitted fabric or a non-woven fabric. Garments are encompassing any apparel item such as T-shirts, trousers, jeans, jackets, shirts, sport garments etcetera. In embodiments, the garments may be used in the process as they are; i.e. garments may comprise non-textile elements such as zippers, rivets, buttons (these elements being typically made of metal or plastic), and labels. Exemplary polycotton yarns are core-spun yarns having a polyester core and a cotton sheath including cotton staple fibers. Blend non-woven textiles may include non-woven polyester filaments on a cotton or cellulosic substrate.

The term "cellulosic fibres" is here defining cotton fibers, cotton derivative fibers, fibers of modified cotton and other fibres typically used in a yarn such as linen fibres, fiber flax, jute fibres, hemp fibres, ramie fibres, kenaf fibres, sisal fibres, henequen fibres and similar. The cotton and cellulosic fibers in the textile to be recycled are generally in the form of staple fibers in a yarn. Viscose and other man-made cellulosebased fibers fall under the definition of cellulosic fibers in this application. In both cases the cotton fibers or cellulosic fibers are recovered as such (e.g. in the original form of staple fibers of a yarn) rather than being reduced to a pulp. As an example, a polycotton core-spun yarn, made of a cotton sheath and a polyester core, that is treated according to the invention process, will eventually result in a yarn where only the sheath is present at the end of the process, the polyester having been dissolved into the disodium salt of TPA and EG by the depolymerization solution during the process.

The term "bath ratio" is intended to define the ratio between the dry weight of the textiles to be recycled and the weight of the solution, wherein, according to the stage of the invention process, the solution is either the depolymerizing solution, or the bleaching solution or the washing solution used in further steps of the process as described in the description here below.

The terms "dissolve" or "dissolution", when referred to polyester, is intended to define the result of the depolymerization of the polyester into its monomers, whereby the polyester filaments or fibers are substantially no longer present in the treated textile after the invention process.

The term "circulating" referred to the depolymerization solution is intended to define that the solution is subjected to a flow that is forced through the textiles and through a reaction chamber in which the textiles are held. The flow is generated preferably by a pump that feeds the solution into the reaction chamber through the textiles and through the chamber. The solution leaves the reaction chamber and is subsequently fed back to it to be circulated again through textiles and through the chamber. The bleaching and washing solutions are also circulated through the textiles several times in the same way as the depolymerizing solution. The plant for carrying out the invention process comprises a fluidic circuit typically including an inlet and an outlet to the reaction chamber.

The textiles are held in the reaction chamber in a still, i.e. static, condition. The term "still" or "static" condition is intended to define that the textiles are housed in a reaction chamber and are held there while the depolymerization solution (or the bleaching solution or the washing solution) is fed through the textiles. The textiles fill the chamber so that they do not move with the solution, i.e. they are not displaced under the action of the flow of solution. In a preferred embodiment, the textiles are compressed in the chamber. The fact that the textiles fill the chamber, possibly they are pressed and compressed into it, also provides the advantage of greatly improving the productivity of the process. In other words, embodiments providing for the textiles being stirred or moved within a depolymerization solution, such as e.g. in a washing machine by means of a rotating drum, are not according to the present invention.

In particular the present invention relates to a process for recycling waste blend textiles comprising polyester and cellulosic fibers, preferably cotton fibres, the process including a depolymerization of the polyester in a basic aqueous solution, comprising the following steps:
a) providing an amount of said textiles in a reaction chamber;
b) providing an amount of said basic depolymerization solution according to a bath ratio in the range of 1/2 and 1/20 by weight of textile overweight of solution;
c) circulating said amount of depolymerizing solution through said textiles to depolymerize said polyester into corresponding monomers and to remove said polyester monomers from said textiles;
d) removing said depolymerizing solution from said reaction chamber;
   wherein the temperature of the said depolymerizing solution in step c) is in the range between 101 °C and 160 °C,
   and wherein
e) the textiles are in a still, i.e. static, condition and the solution is circulated through them to provide treated textiles comprising cellulosic staple fibers, preferably cotton staple fibres, substantially free from polyester material.

Advantageously in the process the chamber is fed with a depolymerizing solution to depolymerize polyester fibres of the waste blend textiles maintained in a still condition within the reaction chamber under reaction conditions allowing the cleavage of the ester bonds of polyester into its monomers, terephthalic acid as disodium salt (Na₂TP), and ethylene glycol (EG) and dramatically reducing the alteration and depolymerization of the cellulosic staple fibres.

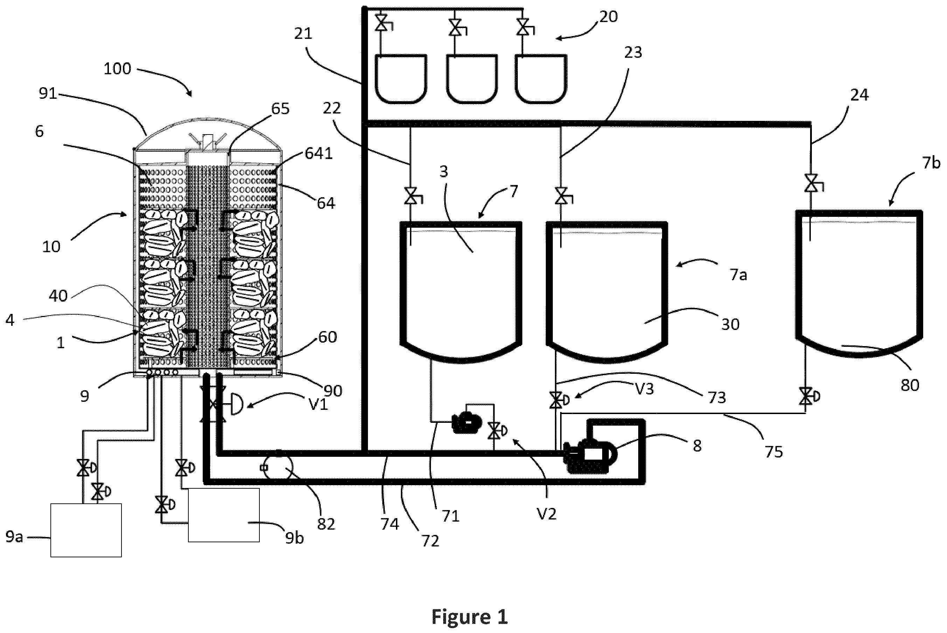

As visible in figures 1, 2 and 7 and explained here below the flow of depolymerization solution is fed into the chamber, through the textiles out of the chamber and back again to the chamber and through the textiles several times to depolymerize the polyester present in the textile. The number of times, i.e. the number of cycles that the solution is fed through textiles, may be adapted to the amount of polyester in the textile to be treated. Advantageously, the number of times, or cycles, the depolymerization solution is fed through textiles is in the range of 30 to 480 cycles per hour, preferably 50 to 400 cycles per hour, more preferably 60 to 300 cycles per hour, most preferably 70 to 200 cycles per hour.

Advantageously, the temperature of the depolymerizing solution is increased in the closed chamber, whereby the pressure is correspondingly increased, to such values that the polyester filaments or fibers are depolymerized but the degrading or alteration (e.g. reduction in the degree of polymerization) of the cellulosic fibers, e.g. the cotton staple fibers, is minimized and possibly avoided.

Advantageously in step c) a selected amount of depolymerizing solution at the claimed temperature is circulated, e.g. by means of a pump, in the chamber and through the fabrics for the entire length of step c) of the process. In other words, the waste blend textiles are maintained in a substantially static condition and are contacted several times with the depolymerizing solution by repeatedly passing, i.e. circulating, the solution through the fabrics to increase the content of disodium terephthalate (Na₂TP) or terephthalate ions or EG and more generally products from degraded polyester in the said solution, while maintaining the cotton or cellulosic fibres as intact as possible. It was found that the combination of keeping the textiles in a still, or static condition together with circulating, i.e. flowing, the depolymerization solution through the textiles results in that a full depolymerization of polyester is obtained and that at the same time depolymerization of the cotton fabric is greatly reduced.

Advantageously, the technical effect of the circulation, i.e. flow, of the depolymerizing solution under mild conditions through static, i.e. still, textiles, is to protect cellulose polymer chains against degradation and to recover cotton fibers and cellulosic fibers that are suitable to be processed into recycled yarns in a way known in the art, e.g. mechanically treating the yarns to recover fibers to be spun into new yarns.

Advantageously, at the end of the process, the polyester fibres/filaments have been removed (by depolymerization) from the treated fabrics that comprise cotton or other cellulosic fibres and that are substantially free from polyester degradation products, in particular from Na₂TP, TPA, and ethylene glycol (EG). The treated textiles obtained with the invention process include cotton/cellulosic fibers, typically in the form of yarns, which can be subjected to recycling processes of the cotton yarns in ways known in the art. The cotton fibres thus obtained can be used for yarns spinning processes tuned according to the degree of polymerization of the cellulose fibres.

Advantageously in case the treated textiles are garments comprising non-textile, e.g. metal (or plastic) portions (e.g buttons, rivets, zippers), according to the invention process the sewing yarns in polyester that stitch together the garment portions are depolymerized so that said metal or plastic elements become detached from the garments and can be removed from them and possibly recycled.

Advantageously, after treatment according to the process of the invention a garment that is made of a fabric consisting of cotton yarns (100% cotton) will provide a valuable source of cotton fibers that are still provided with very good mechanical properties.

According to an aspect the depolymerizing solution is an alkaline solution, preferably an alkaline solution comprising sodium hydroxide or potassium hydroxide. The said solution preferably contains an amount in the range between 70 g/L and 500 g/L, more preferably 76 to 120 g/L, of a sodium hydroxide solution with a Baumé degree equal to 48 °Be. In other words, the concentration of NaOH in the depolymerizing solution is in the range of 33g/L to 237 g/L of NaOH, preferably 36 g/L to 57 g/L of NaOH.

According to a possible aspect, the amount of depolymerizing solution to be used in the process is selected according to the amount of textiles to be treated. In embodiments, the bath ratio is in the range of 1/2 to 1/20, preferably 1/2 to 1/15, most preferably 1/5 to 1/8; the bath ratio is the ratio by weight between the weight of textiles to be treated and the weight of the depolymerizing solution.

According to a possible aspect in step c) the temperature of the depolymerizing solution is in a range between 101 °C and 160 °C, preferably in the range of 120°C to 160°C. Advantageously the temperature of the depolymerizing solution is in the range between 130 °C and 140 °C; the claimed ranges result in minimizing the alteration of the chemical and mechanical properties of the cotton or cellulosic fibres such as length and dimensions of the said fibres, degree of polymerization of the cellulose.

According to a possible aspect, the pressure inside the chamber during step c) is in the range of 1.05 bar (0.05 barg) to 7.0 bar (6.0 barg), preferably 2.7 bar (1.7 barg) to 7 bar (6 barg), more preferably 2.7 bar (1.7 barg) to 5.5 bar (4.5 barg).

According to a possible aspect, the depolymerizing step c) is carried out for a period of time between 91 minutes to 240 minutes, preferably between 100 minutes to 150 minutes, more preferably 120 minutes.

In a preferred embodiment the process step c) is carried out at 130 °C for 120 minutes, preferably at a pressure in the range of 2.7 bar (39.16 psi) to 5.5 bar (79.77 psi).

Advantageously the above bath ratio at the claimed bath temperature and pressure results in a complete or substantially complete depolymerization of the polyester fibres when the solution is circulated through the chamber and the static textiles for the claimed amount of time. Preferably the direction along which the solution is circulated through the reaction chamber can be one flow direction, preferably from the center to the sides of the chamber, or the flow direction can be changed during the depolymerization process to alternate a flow directed from the center of the chamber to the peripherical wall with a flow directed from the peripherical wall to the center of the chamber. After said period of time the depolymerizing solution is cooled to a temperature between 40 °C and 80 °C.

As above mentioned, the textiles are kept still, in a static condition and the depolymerization solution is pumped into the reaction chamber containing the textiles, through the textiles and out of the chamber, preferably several times until polyester has been fully depolymerized. The garments are filling a portion of the reaction, i.e. depolymerization, chamber and are kept in place by suitable structural elements that avoid that the textiles move within the chamber. Preferably the textiles are kept in a compressed state so as to completely fill the relevant portion of the chamber: this state has the advantage that the depolymerization solution flows through all the static garments and that a high productivity of the process is obtained.

It is an advantage of the invention that some types of dyes are removed from the textiles during the depolymerization step. Indeed, reactive dyes are removed by hydrolysis via reductive decolorization from the waste textiles. Removal of reactive dyes can be carried by means of techniques that are, per se, known in the art.

Advantageously, indigo and indigoid dyes may be removed, i.e. detached, at least in part from the textiles by the flow of depolymerizing solution circulated through the textiles. The detached indigo dyes accumulate in said solution, from which they may be recovered in a subsequent step.

According to a possible aspect, the process further comprises a step of bleaching the treated fabrics in the reaction chamber by means of a bleaching/decolorization solution comprising an oxidizing agent such as hydrogen peroxide, perborate, percarbonate, preferably hydrogen peroxide. The bleaching step is carried out after removing the depolymerizing solution from the chamber; some depolymerizing solution typically remains in the textiles after removing the solution. Similarly to the depolymerization solution also the bleaching solution is circulated through the static textiles, e.g. by means of a pump.

Advantageously, the bleaching solution allows to remove the colour imparted by the remaining indigo dyes from the treated textiles. The bleaching solution may include stabilizers and wetting agents, preferably dispersing agents such as, for example, Permulsin FF (Bozzetto Group) and/or wetting agents such as Sanwet NW 2109 (Chemko) and/or stabilizing agents for the oxidizing agent, such as Sanstabil A100 (Chemko).

According to a possible aspect, the bleaching solution is provided in an amount according to a bath ratio in the range of 1/2 to 1/20, preferably 1/7 to 1/9, more preferably 1/8 by weight of textiles (dry) and bleaching solution. The pH of the bleaching solution is basic; the bleaching solution should have an alkali concentration of at least 10 g/L, preferably between 20 g/L to 30 g/L, more preferably 25 g/L of a NaOH solution at 48 °Be.

According to a possible aspect, the oxidizing agent is present in the bleaching solution in an amount effective to remove the indigo color from the textiles. In preferred embodiments the bleaching solution contains between 1 g/L to 7 g/L, preferably 4 to 7 g/L, even more preferably 5 g/L of hydrogen peroxide solution with concentration 50% by weight (w/w). In other words, the concentration of H₂O₂ in the bleaching solution is in the range of 0.5 g/L to 3.5 g/L, preferably 2 g/L to 3.5 g/L, more preferably 2.5 g/L. The bleaching solution is heated to a temperature between 100 °C and 110 °C, preferably 105 °C and kept at said temperature for a period of time between 100 minutes and 150 minutes, preferably 120 minutes. After said period of time the bleaching solution is cooled to a temperature between 40 °C and 80 °C, preferably 50 °C and eventually removed from the reaction chamber.

Advantageously, the bleaching solution is kept at a temperature between 100 °C and 110 °C in order to minimize the alteration and degradation of the cotton or cellulosic fibres.

According to a possible aspect, the oxidizing agent is gradually poured in the bleaching solution in the chamber for a time period e.g. in the range of 2 to 7 minutes, preferably 5 minutes. Advantageously, the oxidizing agent is gradually poured in the bleaching solution in order to control the presence of undesired gaseous content inside the chamber produced from the reaction between the bleaching solution and oxidizing agent. The control of the amount of gaseous content inside the chamber prevents undesired increase of pressure inside the chamber and increases the efficiency of hydrogen peroxide.

According to a possible aspect, the process further comprises a step of washing the treated fabrics by means of a washing solution preferably comprising dispersing agents with a concentration between 1 g/L and 5 g/L; in the washing step TPA salts and EG possibly present in the textiles are removed from the textiles.

Examples of dispersing agent are Permulsin FF (Bozzetto Group) or Develope JFR NB (MKS DEVO).

Advantageously the mass concentration of the sodium hydroxide in the washing solution is lower than 20% to avoid tearing or breaking of the cellulose fibres.

According to a possible aspect, the washing solution has a bath ratio in the range of 1/2 to 1/20, preferably between 1/7 to 1/9, more preferably 1/8. Similarly to the steps of depolymerizing and bleaching the textiles, also the washing step is carried out on static textiles in the reaction chamber by a flow of washing solution that is circulated through the textiles.

According to a possible aspect of the invention, the treated fabrics, after depolymerization and removal of polyester monomers, comprise cotton fibres with a degree of polymerization between 600 and 3500 and detectable mechanical properties, such as breaking strength and tear strength, that make said fibers suitable for further use in yarn production.

The degree of polymerization can be calculated by measuring the relative viscosity via capillary viscometer, then calculating the corresponding limiting viscosity according to the ISO5351 standard and later calculating according to the equations known in the art such as modified Mark-Houwink-Sakurada equation for cellulosesolvent (standard method) system described in literature: Sihtola H, Kyrklund B, Laamanen L, Palenius I (1963) - Comparison and conversion of viscosity and DP-values determined by different methods. Paperi Ja Puu, 45:225-232. In detail, viscosity can be obtained from the equation [η] = 954×log[ηᵣₑₗ]-325 mentioned also in WO2019/140245. DP is given as range from the equations: DP^{0.905}= 0.75×[η] ; and DP= 1.9[η].

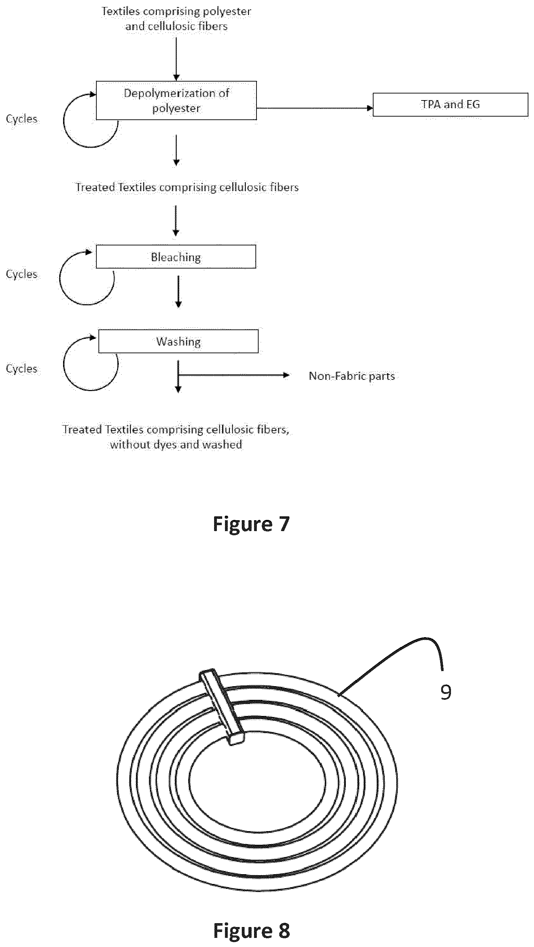

According to a preferred embodiment of the invention process, see e.g. fig. 7, the depolymerizing solution obtained after a depolymerization cycle is re-used in a subsequent depolymerization cycle of a fresh batch of textiles to be treated. The same aspect applies to the bleaching solution and possibly to the washing solution that can be used again in a subsequent bleaching cycle or washing cycle, respectively. This aspect of the invention provides the advantage of greatly reducing the consumption of water. The applicant has found that the depolymerizing solution may be used several times, e.g. for at least twenty times and even more, without losing its properties, provided that the content of NaOH is restored to the initially required amount before being re-used in a successive cycle of treatment of a new batch to be depolymerized. Also, it was found that the increase in content of TPA salts and EG that occurs at each cycle, does not jeopardize the chemical properties and depolymerizing capability of the solution.

The number of times a depolymerization solution can be re-used in another depolymerization cycle is depending from the initial amount of polyester present in the textiles to be treated. In other words, the greater the amount of polyester present in the textile to be treated, the lower will be the number of cycles a depolymerizing solution can be re-used with a fresh batch of textiles to be treated. This may also apply to a bleaching solution and/or a washing solution.

The depolymerizing solution, the bleaching solution and the washing solution can be set to their required initial conditions (e.g. to the initial NaOH concentration) and re-used in additional cycles of the invention process a number of times in the range of 1 to 100, preferably 10 to 100; typically 10 to 40.

It is an advantage of the invention that after the depolymerization step the cotton or cellulosic textiles and in particular the fabrics, are not reduced to a cellulosic pulp as it occurs in the prior art when a complete depolymerization is carried out. Rather, thanks to the invention, the reduction of the DP (degree of polymerization) of the cellulosic fibres is maintained to a level that is fully acceptable and in any case such that the cotton fibers of the textile after depolymerization and also after the complete process, i.e. including bleaching and washing, are suitable to be recovered as staple fibers and to be recycled and used (with no need for chemical pre-treatment) for production of yarns and fabrics. Actually, a treated blend fabric, i.e. a blend fabric after the depolymerization of the invention, maintains detectable and useful mechanical properties such as breaking strength or tearing strength, as shown in example 3 and Table 1.

The breaking strength of the fabrics as obtainable after the invention process in the warp and weft direction can be measured according to ASTM D5034. Final results of the tests provide the weight in kilograms (Kg) needed to break the textile before the process and after the process.

The tearing strength of the textile as obtainable after the invention process in the warp and weft direction can be calculated according to ASTM D1424. Final results of the tests provide the weight in grams (gr) needed to tear the textile before the process and after the process.

According to a possible aspect, if the textiles, namely fabrics and garments, contain one or more optical brightening agents, the process further comprises a pre-treating step of removing the optical brightening agents from the textiles with a suitable solvent before the depolymerization step of the process. In this step the solution removes brightening agents and/or inhibiting agents and/or quenching agents; the removal of the brightening agent is carried out with a bath ratio in the range of ½ to 1/20, preferably 1/10 at a temperature between 30 °C and 40°C for a period of time between 10 minutes and 30 minutes.

Optical brightening agents are chemicals compounds which can be added to fabrics to provide a whiter or brighter effect in area in which the optical brightening agents are present compared with areas of the fabrics in which the optical brightening agents are not present,

Optical brightening agents present in the blend textiles should be removed before step a) above described in order to obtain at step e) a treated textile comprising cellulose fibres which has a homogenous colour or a homogenous level of brightness.

Advantageously, said pre-treating step of removing the optical brightening agents can be obtained with an aqueous solution comprising decolorizing agents for optical brighteners such as, for example, Fluorex DEL (CHT Group) and preferably also wetting agents such as Sanwet M30 (Chemko). Preferably, the decolorizing agents have a mass concentration between 0.2 g/L to 1.2 g/L.

The present invention further relates to a plant for recycling blend textiles comprising polyester fibres and cotton or cellulosic fibres, comprising a reaction chamber configured to contain the waste textiles, at least one tank to contain a depolymerizing solution, and optionally any of a bleaching solution or a washing solution, a pump to feed and circulate a depolymerizing solution from the tank to and through the chamber, and control means to control the temperature of the depolymerizing solution inside the chamber, typically including a heating means and a cooling means.

The chamber is configured to contain the textiles to be recycled. Typically, the chamber is made in a material which is suitable for being in contact with the depolymerizing solution, the bleaching solution and the washing solution. Examples of such materials are steel metals, preferably stainless steel, more preferably stainless steel such as AISI 316 and AISI 316/316L

The plurality of tanks to contain a depolymerizing solution, a bleaching solution and a washing solution are fluidically connected to the chamber to feed or remove the solutions from the chamber. Typically said plurality of tanks are made in a material which is suitable to come into contact with the depolymerizing solution, the bleaching solution and the washing solution.

Advantageously, the pump allows to control the flow of the depolymerizing, bleaching and washing solutions from the plurality of tanks to the chamber. Typically, the said pump can be selected from centrifugal pumps, positive-displacement pumps, axial-flow pumps or similar pumps; preferred pumps are centrifugal pumps. Advantageously, the plant may also allow reversing the direction of the flow of the solutions inside the chamber in a way known per se, e.g. by means of an alternator switch device connected to the pump.

As previously mentioned, the depolymerizing solution is circulated by the pump through the textiles (and the chamber) until the polyester material in the textile has been depolymerized and completely or substantially completely removed - as monomers - from the textile.

The chamber is provided with heating means to increase the temperature of the depolymerizing solution. The heating means can be placed inside chamber e.g. at the bottom of the chamber. The heating means may be coils through which superheated steam is fed to heat the depolymerizing solution. Means for cooling the solution are also provided e.g. in the form of another coil connected to a source of cooling fluid such as cold water. Advantageously a same coil may be used as heating and cooling means by being selectively connected to a source of heating or cooling fluid.

Typically, the heating and the cooling means is connected to control means that is also connected to sensor means that detects the temperature of the depolymerizing solution inside the chamber.

According to a possible aspect, the chamber comprises a filtering basket, to house the textiles to be treated. Advantageously, the filtering basket comprises a rigid structure, e.g. a metal structure, typically in the form of a cylinder, provided with openings along its walls, to enable the depolymerizing solution to flow inside the chamber and through the textiles. Housing the waste blend fabrics in filtering basket allows to constrain the textiles in the basket during the flow of the solutions; in other words, the textiles are kept still, i.e. static, while the flow of the depolymerizing solution is forced through the textiles in the chamber. Advantageously, the textiles are filling the entire space of the basket, preferably they are compressed into said basket; above the basket the chamber is provided with an empty space, as visible from the figures.

Preferably, the filtering basket is a perforated rigid container shaped according to the reaction chamber, comprising lateral perforated walls and a perforated rigid column positioned at the central axis of the perforated rigid basket. Advantageously the depolymerizing solution can flow either from the perforated rigid column towards the waste blend fabric and through the lateral perforated wall or from the lateral perforated walls towards and through the recycling textiles allowing to have a homogeneous and uniform contact over time of the depolymerizing solution with the recycling textiles.

According to a possible aspect, the chamber comprises at least one, preferably a plurality of perforated separation elements housed in the basket and positioned along said central column and extending transversally to it. The separation element comprises a perforated plate on which the textiles can be placed. The perforated plate allows the flow of the solutions through the holes. The separation elements also act as retaining means to keep the textile in a static condition.

The present invention further relates to textiles as obtained by the invention process, said textiles including cotton fibers with a degree of polymerization between 600 to 3500. In embodiments said cotton fibers are included in a fabric as obtained through the invention process, said fabric having a measurable breaking strength or tearing strength in a warp direction and weft direction. Because the polyester content of the original blend textiles is no longer present, the treated yarns or treated fabrics are provided with empty spaces that were originally housing polyester filaments, fibers or yarns.

As previously mentioned the process of the invention may be used to carry out a process of treatment of garments without having to cut them or to remove parts of them. In particular the garment may include a fabric consisting of yarns made of cotton, i.e. a 100% cotton fabric, and polyester in a reduced amount that derives from the sewing lines that are used to sew, i.e. stitch. together the portions of the garment in a way known in the art. These garments or portions thereof may be treated according to the process and in a plant as previously disclosed for the treatment of blend textiles. The reaction conditions in the process for treating garments wherein the fabric consists of cotton or other cellulosic fibers, might be milder than the conditions used in a process for treating a blend textile with e.g. 40%-50% polyester content.

A further object of the present invention is therefore a process for recycling garments and portions thereof comprising polyester and cellulosic fibers, preferably cotton fibres, wherein the garment comprises a plurality of fabric portions sewn together by sewing yarns, said fabric portions consisting of cotton yarns or cellulosic yarns, preferably 100% cotton fabric portions, and said sewing yarns being polyester sewing yarns, the process including a depolymerization of the polyester yarns in a basic aqueous solution, comprising the following steps:
a) providing an amount of said garments in a reaction chamber;
b) providing an amount of said basic depolymerization solution according to a bath ratio in the range of 1/2 to 1/20, preferably 1/4 to 1/8 by weight of garments over weight of solution;
c) circulating said amount of depolymerizing solution through said garments to depolymerize said polyester into corresponding monomers and to remove said polyester monomers from said garments;
d) removing said depolymerizing solution from said reaction chamber;
   wherein the temperature of the said depolymerizing solution in step c) is in the range between 101 °C and 160 °C,
   and wherein
e) the garments are in a still, i.e. static, condition and the solution is circulated through them to provide treated garments comprising cellulosic staple fibers, preferably cotton staple fibres, substantially free from polyester material.

In this case, according to the invention process the sewing yarns in polyester that stitch together the fabric portions that form the garment are depolymerized, so that said fabric portions are detached from one another and can be separated and possibly recycled.

According to the present description, garments are encompassing any apparel item such as T-shirts, trousers, jeans, jackets, shirts, sport garments etcetera. In embodiments, the garments may comprise non-textile elements such as zippers, rivets, buttons (these elements being typically made of metal or plastic), and labels. Advantageously in case the garments comprise non-textile elements or portions (e.g buttons, rivets, zippers), according to the invention process the sewing yarns in polyester that stitch together the garment portions are depolymerized so that said the garment portions become detached.

It was surprisingly found that at the end of the process, especially after the bleaching and washing steps, the non-textile elements such as metal or plastic elements become detached from or loosely attached to the garments and can be very easily removed from the mass of treated garments e.g. in a destoning machine or in a tumble dryer.

Therefore, the process of recycling garments made of fabric consisting in cotton or cellulosic fibers may provide a further step in which non-textile elements are removed from the treated garments after at least part of the process has been carried out.

Advantageously in the process the chamber is fed with a depolymerizing solution to depolymerize polyester fibres of the sewing yarns of the waste garment maintained in a still condition within the reaction chamber under reaction conditions allowing the cleavage of the ester bonds of polyester into its monomers, terephthalic acid as disodium salt (Na₂TP), and ethylene glycol (EG) and dramatically reducing the alteration and depolymerization of the cellulosic staple fibres.

Advantageously, the temperature of the depolymerizing solution is increased in the closed chamber, whereby the pressure is correspondingly increased, to such values that the polyester sewing yarns are depolymerized but the degrading or alteration (e.g. reduction in the degree of polymerization) of the cellulosic fibers, e.g. the cotton staple fibers, of the cellulosic fabric portions making the garment is minimized and possibly avoided.

Advantageously in step c) a selected amount of depolymerizing solution at the claimed temperature is circulated, preferably by means of a pump, in the chamber and through the garments for the entire length of step c) of the process. In other words, the waste garments are maintained in a substantially static condition and are contacted several times with the depolymerizing solution by repeatedly passing, i.e. circulating, the solution through the garments to increase the content of disodium terephthalate (Na₂TP) or terephthalate ions or EG and more generally products from degraded polyester in the said solution, while maintaining the cotton or cellulosic fibres as intact as possible. It was found that the combination of keeping the garments in a still, or static condition together with circulating, i.e. flowing, the depolymerization solution through the garments and the chamber results in that a full depolymerization of polyester is obtained and that at the same time depolymerization of the cellulosic (preferably cotton) fabric portions forming the garment is greatly reduced or possibly avoided.

According to an aspect the depolymerizing solution is an alkaline solution, preferably an alkaline solution comprising sodium hydroxide or potassium hydroxide. The said solution preferably contains between 70 g/L and 500 g/L, more preferably 76 to 120 g/L of a sodium hydroxide solution with a Baumé degree equal to 48 °Be. In other words, the concentration of NaOH in the depolymerizing solution is in the range of 33g/L to 237 g/L of NaOH, preferably 36 g/L to 57 g/L of NaOH.

According to a possible aspect, the amount of depolymerizing solution to be used in the process is selected according to the amount of garments to be treated. In embodiments, the bath ratio is in the range of 1/2 to 1/20, preferably 1/2 to 1/15, most preferably 1/5 to 1/8; the bath ratio is the ratio by weight between the weight of garments and the weight of the depolymerizing solution.

According to a possible aspect in step c) the temperature of the depolymerizing solution is in a range between 101 °C and 160 °C, preferably in the range of 120°C to 160°C. Advantageously the temperature of the depolymerizing solution is in the range between 130 °C and 140 °C; the claimed ranges result in minimizing the alteration of the chemical and mechanical properties of the cotton or cellulosic fibres such as length and dimensions of the said fibres, degree of polymerization of the cellulose.

According to a possible aspect, the pressure inside the chamber during step c) is in the range of 1.05 bar (15.23 psi) to 7.0 bar (101.5 psi), preferably 1.4 bar (39.16 psi) to 3.5 bar (101.5 psi), more preferably 2.7 bar (39.16 psi) to 5.5 bar (79.77 psi).

According to a possible aspect, the depolymerizing step c) is carried out for a period of time between 60 minutes to 240 minutes or 91 to 240 minutes, preferably between 60 minutes and 150 minutes, more preferably 60 to 120 minutes.

All the details of the invention process and plant previously discussed with reference to treatment of blend fabrics also apply to garment treatment and are used to carry out the above disclosed process of treating garments or portions thereof consisting in cotton or cellulosic fibers, fabric and polyester sewing yarns. In particular, the depolymerizing solution is circulated through the garments at the disclosed reaction conditions until full depolymerization of the polyester sewing yarns; preferably a bleaching/decolorization and washing step may follow under the conditions previously disclosed for the treatment of textiles depending on the content of textile material. The results of the treatment of a garment including non-textile parts and a fabric that is 100% cotton (a so-called 100% cotton fabric) is disclosed in Example 6.

In a preferred embodiment the process step c) is carried out at 130 °C for 120 minutes, preferably at a pressure in the range of 2.7 (39.16 psi) to 5.5 bar (79.77 psi).

Advantageously the flowing, i.e. circulation of the depolymerization solution at the said bath ratio at the claimed bath temperature and pressure results in a complete or substantially complete depolymerization of the polyester sewing yarns. Advantageously the cotton fibres obtained from the invention process are in the form of staple fibers provided with a degree of polymerization sufficiently high to allow the said fibers to be recycled as such (by mechanical means) and used for production of yarns and fabrics without the need of any chemical treatment.

In the following description the invention will be disclosed by making reference to fabrics and garments, in particular blend cotton fabrics and garments; it should be noted that the same steps and description apply to textiles in general as above defined, i.e. also to yarns and fibers and to other cellulosic fibers in addition to cotton.

### BRIEF DESCRIPTION OF THE DRAWINGS

Further aspects and advantages in accordance with the present invention will be discussed more in detail with reference to the enclosed drawings, given by way of non-limiting example, wherein:
Figure 1 is a schematic view of the plant housing waste fabrics comprising polyester fibres and cellulosic fibres;
Figure 2 shows the schematic of the plant of figure 1 and the treated fabrics comprising cellulosic fibers at the end of the process;
Figure 3a shows a perspective view of the section of the filtering basket of figure 1;
Figure 3b shows a sectional view of the closed reaction chamber and the filtering basket of figure 1;
Figure 4 shows a perspective view of the perforated separation element of figure 1
Figure 5a shows an example of fabric before the process, wherein the fabric comprises polyester fibers and cellulosic fibers;
Figure 5b shows the fabric of figure 5a after the process, wherein the fabric comprises cellulosic fibres without polyester fibers;
Figure 6a shows an example of garment before the process, wherein the garment comprises polyester fibers and cellulosic fibers and non-fabric parts before the process;
Figure 6b shows the garment of figure 6a after the process, wherein the garment comprises cellulosic fibres only;
Figure 7 shows a schematic of the process comprising the depolymerization step, the bleaching step and the washing step and the possible re-use of the respective solutions;
Figure 8 shows a perspective view of the heating and cooling element of the plant of figure 1;
Fig. 9 shows two photos (a and b) of a garment before (a) and after (b) the process of the invention; and

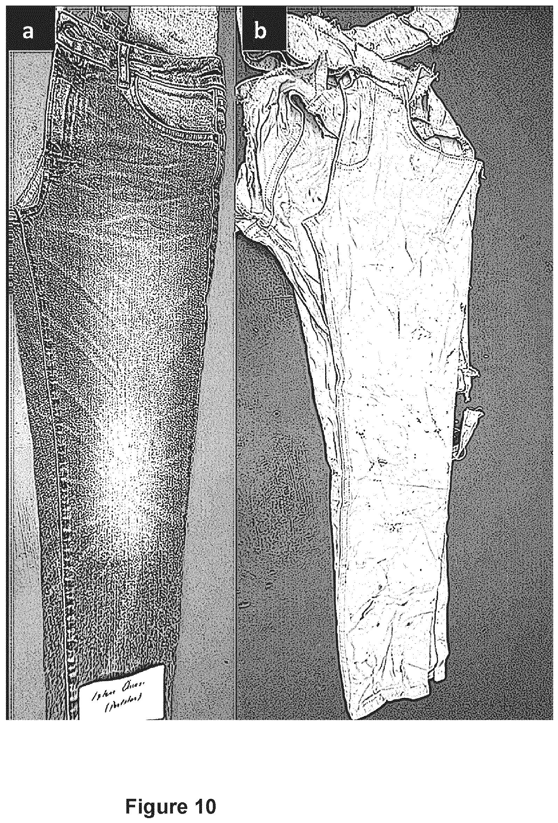

Fig. 10 is a black and white version of the photos of fig. 9.

### DETAILED DISCLOSURE OF THE PRESENT INVENTION

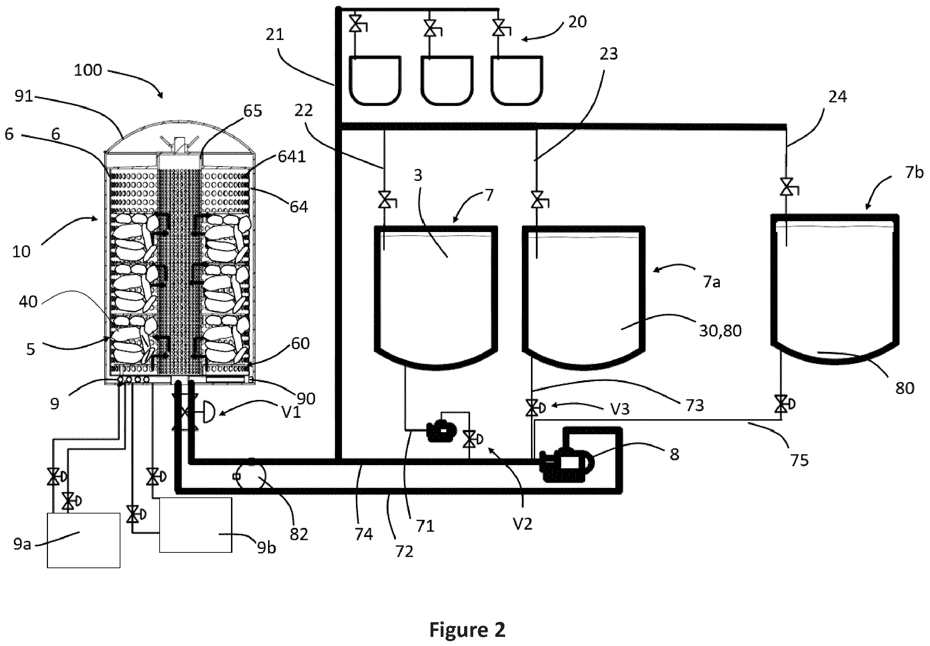

Figure 1 and figure 2 show a plant 100 suitable to carry out the invention process on waste blend fabrics 1, as well as on waste garments comprising polyester and cellulosic fibers, preferably cotton fibres, wherein the garment comprises a plurality of fabric portions sewn together by sewing yarns, said fabric portions being 100% cellulosic fabric portions, preferably 100% cotton fabric portions, and said sewing yarns being polyester sewing yarns. For sake of simplicity, in the following description, reference will be made to blend fabrics only. In figure 1 the plant is shown at the initial stage of the process: it comprises a chamber 10 filled with the blend fabrics to be treated, said fabrics comprising polyester fibres 4 and cotton fibres 40.

Alternatively, the chamber 10 may be filled with waste garments comprising polyester and cellulosic fibers, preferably cotton fibres, wherein the garment comprises a plurality of fabric portions sewn together by sewing yarns, said fabric portions being 100% cellulosic fabric portions, preferably 100% cotton fabric portions, and said sewing yarns being polyester sewing yarns.

Typically, the chamber is cylindrically shaped and includes a side wall, a bottom wall and a lid 91. The closed chamber is configured to withstand pressures generated in the invention process.

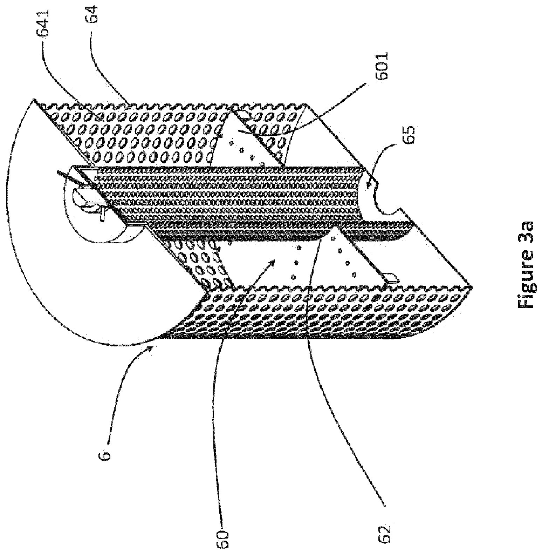

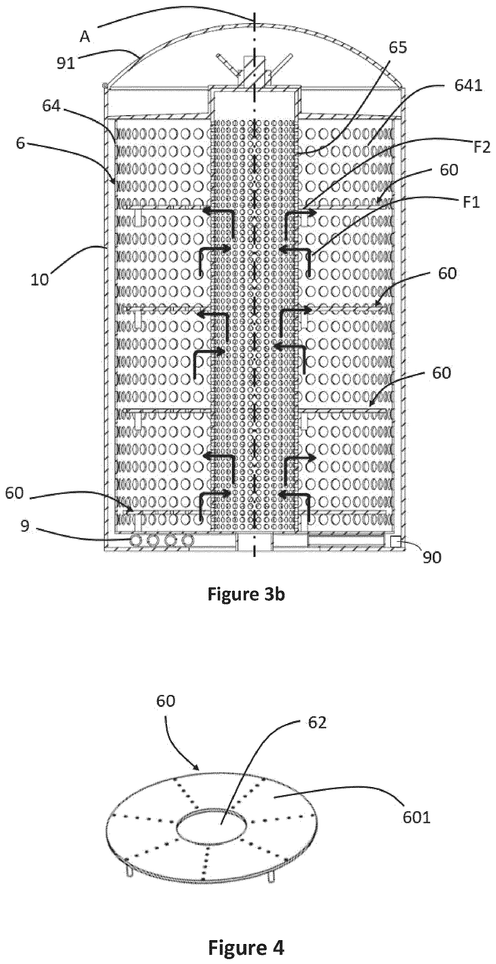

In the shown embodiment chamber 10 comprises a filtering basket 6 to house the waste blend fabrics. As shown in figures 3a and 3b, the filtering basket 6 is in the form of a cylindrical container, usually made of metal, including a perforated lateral wall 64 which allows a flow of a depolymerizing solution 3 within and through chamber 10, the waste blend fabrics 1 being housed in basket 6. As shown in figure 3b with arrows F1 and F2, the flow of depolymerization solution 3 can be substantially in a first direction F2 from the central axis A through perforated internal wall, or column, 65 towards outer wall 64 or in a second direction F1 from the perforated wall 64 substantially opposite to the first flow direction.

In other words, the solution inside the chamber 10 can be circulated in a first direction or in a second direction. In the first direction the flow inside the chamber 10 goes from the inner perforated wall 65 of the filtering basket 6 and is forced through the fabrics 1 to exit the filtering basket 6 from the perforated wall 64. In the second circulation direction, the feeding direction is reversed, i.e. the solution is fed to the chamber in correspondence of the outer perforated wall 64 and forced through the fabrics towards the inner perforated portion 65 and towards the central axis A.

If circulation, i.e. flow, is alternated, in an embodiment the first recirculation is preferably carried out in the first direction for 2 to 6 minutes, preferably 4 minutes. The second recirculation is carried out in the second direction for 4 to 8 minutes, preferably 6 minutes. The flow in the process can be conducted all in the first direction or in the entire process the flow can be conducted in the second direction only.

Advantageously the flow of the depolymerizing solution 3 through the fabrics, out of the chamber and back into it, in a first radial direction and/or in a second radial direction, allows the depolymerizing solution 3 to reach all the waste fabrics 1, that are kept still, i.e. are not stirred in the solution, and to ensure a uniform depolymerization of polyester in a short time. Maximizing the flow injections from the perforated walls of the filtering basket 64 and 65 provides a proper absorption of the depolymerizing solution 3 in the waste fabrics 1 and therefore maximizes the depolymerization of the polyester fibres 4.

In the shown embodiment, see figures 3b and 4, the chamber 10 comprises at least one, preferably a plurality of perforated separation elements 60 housed in the basket 6, transversally to the central column 65. The diameter of separation element 60 is less than the diameter of basket 6, i.e. less than the distance between the internal surfaces 641 of the lateral wall 64, to allow element 60 to be inserted in the basket without leaving a too wide gap on the side. As visible in figure 4 element 60 is provided with a central hole 62 that allows the separation element to slide without mechanical interference along column 65 and inside basket 6. Separation element 60 allows to maximize the filling of basket 6 in chamber 10 with the waste blend fabrics and to prevent the fabrics or textiles from moving within the basket. In case more than one separation element 60 is housed in the filtering basket 6 there will be a pile of waste blend fabrics 1 housed on top of each separation elements 60. Advantageously element 60 comprises a perforated plate 601 such that the flow of the depolymerizing solution 3 is ensured inside chamber 10. Figure 3b also show a top retaining element 603.

The plant 100 further comprises a plurality of tanks, or reservoirs, to contain a depolymerizing solution 3 in tank 7, a bleaching solution 30 in tank 7a and a washing solution 80 in a tank 7b. Said tanks are connected to chamber 10 with respective pipes and through a circulation loop including a pump 8 connected to chamber 10 by means of conduits 72 and 74 and fluid alternator device 82.

The depolymerizing solution 3 can flow from tank 7 to chamber 10 through conduit 71, and conduits 72 and 74 according to the direction of the flow as provided by flow alternator 82. As visible in figures 1 and 2, conduit 72 is connected to the inner column 65 of basket 6 so that it may feed the solution to the inner column 65 of basket 6; conduit 74 is connected to the outer portion of the chamber in correspondence to wall 6 of the basket to receive the solution that has been circulated, i.e. flowed, through the textile and the chamber, in a reversed flow conduit 74 feeds the solution to the chamber.

The alternator device 82 provides an advantageous alternated circulation of the depolymerizing solution inside chamber 10. After feeding the depolymerizing solution to the chamber 10, valve V2 and valve V1 are positioned such that the depolymerizing solution can be circulated through conduits 72, 74 wherein the recirculation of the depolymerizing solution is in a counter clockwise direction. Alternatively, the direction of the flow can be inverted by means of the alternator device 82 such that the recirculation of the depolymerizing solution through the conduits 72,74 and the chamber 10 is in a clockwise direction.

The bleaching solution 30 and the washing solution 80 can flow from the plurality of tanks 7a and 7b, respectively, to conduits 72 and 74. Valves V1, V2 and V3 are located on the circuit ducts to control the flow in the conduits. The plant 100 further comprises a plurality of spare chemical tanks 20 to provide reagents to the tank 7 through conduits 21,22 or to the tank 7a through conduits 21,23 or to the tank 7b through conduits 21,24. Reagents can be alkaline solution or alkali, oxidizing agents, wetting agents, dispersing agents, stabilizing agents, decolorizing agents and similar reagents.

The plant 100 further comprises a heating and cooling element 9a, 9b and a temperature sensor 90 to control the temperature of the depolymerizing solution 3 or the bleaching solution, inside the reaction chamber 10. In the shown embodiment, the heating and cooling means are realized with a coil shown in fig. 8, that is selectively connectable with a source of steam 9a or to a source of cool water 9b to respectively heat or cool the solution in chamber 10.

The invention provides a process for recycling waste blend fabrics 1 comprising polyester 4 and cellulosic staple fibers, preferably cotton staple fibres 40, the process including a depolymerization of the polyester in a basic aqueous solution, comprising the following steps: a) providing an amount of said fabrics in a reaction chamber 10; b) providing an amount of said basic depolymerization solution 3 according to a bath ratio between 1/2 and 1/20 by weight of fabric over weight of solution; c) circulating at least once, preferably several times, said amount of depolymerizing solution 3 through said fabrics 1 to depolymerize and remove polyester fibres 4 from said fabrics; d) removing depolymerizing solution 3 from said reaction chamber 10 wherein the temperature of the said depolymerizing solution is in the range between 101 °C and 160 °C and wherein e) the solution is circulated to provide treated textiles 5 comprising yarns including cellulosic staple fibers, preferably cotton staple fibres 40, substantially free from polyester material.

In the shown preferred embodiment, the waste fabrics 1 are placed in basket 6, possibly with the use of one or more separation elements 60. The basket is preferably completely filled with the fabrics to be treated.

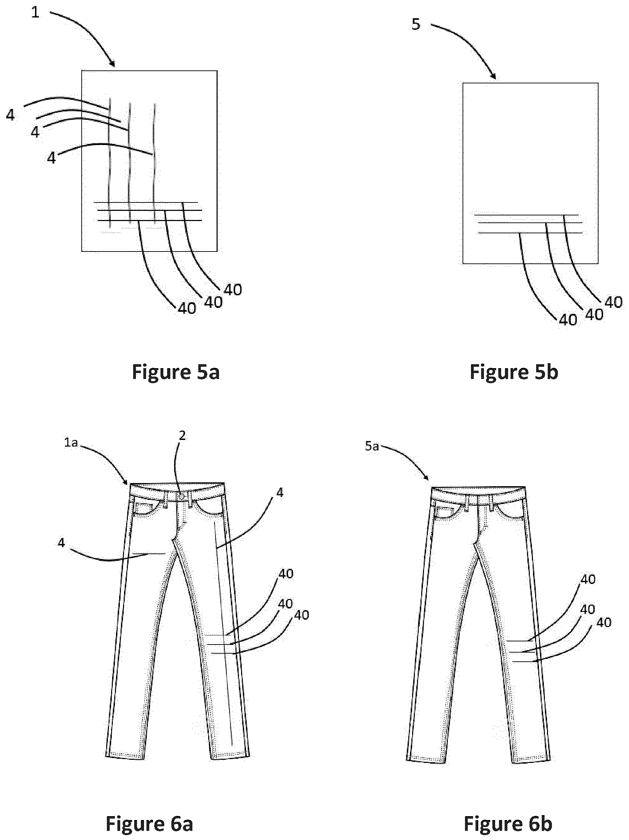

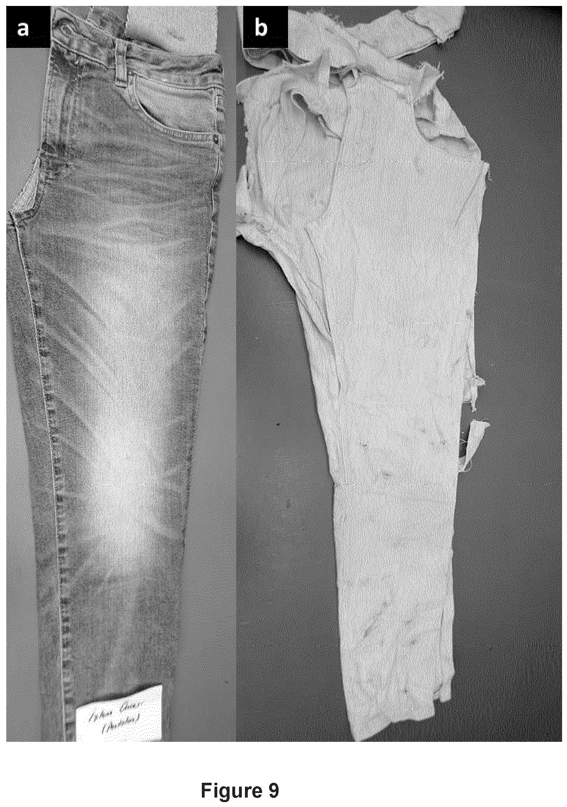

The waste blend fabric 1, shown in figure 5a and the garment 1a made of blend fabric of figure 6a comprise polyester fibres 4 and cotton fibres 40 before the process of the invention. Garment 1a includes non-fabric, i.e. non-textile parts such as button 2 or rivets and a zipper that are made in metal or plastic material. The same fabric and garment are shown in figures 5b and 6b after the invention process, whereby the polyester fibers and filaments have been depolymerized into monomers and are no longer present in the fabric 5 and garment 5a while the cotton yarns 40 and the cotton portions of blend yarns (e.g. the sheath of a core-spun yarn) are still present in the form of a fabric and of a garment. Treated garment 5a does not comprise button 2 (nor rivets and zippers) because it has been additionally treated in a destoning machine or other machine suitable to remove loose solids deriving from treated garments, as here below discussed. Figure 6b schematically shows the garment without buttons and without warp polyester yarns; it is understood that, as explained, depolymerization of the sewing yarns made of polyester results in the treated garment being separated in a plurality of detached pieces as is shown in figure 9. Figure 9 shows two photos of a garment, namely of a garment before (photo a, on the left side) and after (photo b on the right side) the treatment of depolymerization and bleaching (and final washing) of the original garment.

After filling the basket 6 with textiles, a depolymerizing solution 3 comprising sodium hydroxide or potassium hydroxide, preferably sodium hydroxide is fed to the chamber. The solution is prepared by adding to water an amount in the range of 70 g/L to 500 g/L of a NaOH solution that has a Baumé degree of 43 to 50 °Be, preferably of 48 °Be. In a preferred embodiment the amount of said 48°Be solution of NaOH that is added to water is in the range of 76 g/L to 120 g/L.

The amount of depolymerizing solution 3 is selected to have a bath ratio between 1/2 and 1/20, more preferably the bath ratio of the depolymerizing solution is 1/4 to 1/6 by weight of textiles to bath. The depolymerizing solution is heated by means of coil 9 to which steam, namely superheated steam, is fed.

The temperature of the depolymerizing solution 3 in the chamber 10 is controlled in order to depolymerize the polyester fibres 4 while maintaining as far as possible the original mechanical and chemical characteristics, e.g. the degree of polymerization and the dimensions, of the cotton fibers 40 in fabrics 1. The temperature of the depolymerization solution 3 in the chamber 10 is controlled via sensor 90 to be maintained in the range of 101 °C and 160°C preferably 130 to 140 °C.

According to a possible aspect, the pressure inside chamber 10 in step c) is in the range between 1.05 bar (15.23 psi) to 7.0 bar (101.5 psi), preferably 2.7 bar (39.16 psi) to 7.0 bar (101.5 psi), more preferably between 2.7 bar (39.16 psi) and 5.5 bar (79.77 psi). The pressure inside the closed chamber 10 may change due to a change of temperature of the depolymerizing solution 3, or of the bleaching and washing solutions.

According to a preferred aspect, the temperature of the depolymerizing solution 3 in the chamber 3 is kept for a period of time between 91 minutes and 240 minutes, preferably between 100 and 150 minutes, more preferably 120 minutes. After said period of time the depolymerizing solution is cooled to a temperature between 40 °C and 80 °C.

The depolymerizing solution 3 is then removed from the chamber 10 trough conduits 71,72,74 and controlling valves V1, V2.

If the treated fabrics 5 are garments that at the beginning of the process were provided with metal or plastic elements such as zippers, rivets, buttons, after the process the zippers and other metal or plastic elements can be easily separated from the treated garments thanks to the lack of polyester fibers and yarns that result in a weaker final attachment to the fabric especially after the bleaching step. Actually, all the garments' stitches made of polyester yarns are depolymerized and thus removed from the garment, so that the metal or plastic elements can be removed from the treated fabric, i.e. the treated garments.

Reactive dyes are hydrolysed by the depolymerization solution 3 to provide nondyed fabrics substantially free from polyester. A part of indigo is also removed from the fabrics during the depolymerization step.

After depolymerization and removal of depolymerizing solution 3 from chamber 10, if the fabrics include indigo dyed fibers the treated fabrics 5 are subjected to a step of bleaching in the chamber 10 by means of a bleaching solution 30. The bleaching solution 30 is provided to the chamber 10 through conduits 73 connected to the pump 8 and through conduits 72, 74, 73.

The bleaching solution 30 is provided in an amount to give a bath ratio in the range of 1/2 to 1/20, preferably 1/7 to 1/9, more preferably 1/8; the bleaching solution contains a base, preferably NaOH, in a concentration of at least 10 g/L, preferably in the range of 20 g/L to 30 g/L, more preferably 25 g/L of a solution of NaOH having a Baumé degree equal to 48 °Be. In other words, the concentration of NaOH in the bleaching solution is at least 4.73 g/L, preferably in the range of 9.47 g/L to 14.20 g/L of NaOH, more preferably 11.83 g/L of NaOH.

The concentration of hydrogen peroxide in the bleaching solution is in the range 2 g/L to 7 g/L, preferably 5 g/L and the solution is heated via coil 9 to a temperature in the range between 100 °C to 110 °C, preferably 105 °C and kept at said temperature for a period of time in the range between 60 to 150 min, preferably 100 minutes to 150 minutes, preferably 120 minutes. After said period of time the depolymerizing solution is cooled to a temperature between 40 °C and 80 °C, and discharged back to tank 7a.

According to a possible aspect, the oxidizing agent is gradually added to the bleaching solution 30 in the chamber 10 for a period of time in the range of 2 minutes to 7 minutes, preferably about 5 minutes.

The gradually addition of the oxidizing agent in the bleaching solution 30 is preferred in order to avoid an undesired increase of the pressure inside the closed chamber 10 and to maintain a good efficiency of the oxidizing agent.

The process further comprises a step of washing the treated fabrics 5 after depolymerization or bleaching, by means of a washing solution 80 comprising dispersing agents. The washing solution 80 is held in tank 7b and is fed to chamber 10 through conduits 75 connected to pump 8 through conduit 74. The washing solution 80 has a bath ratio in the range of 1/2 to 1/20, preferably 1/7 to 1/9, more preferably 1/8.

The step of washing treated fabrics 5 comprising cellulose fibres 40 can be performed either after step e) above described or after the treated textiles 5 have been subject to the bleaching solution 30. In other words, the step of washing can be performed after the end of the depolymerization of the polyester fibres (when no bleaching is carried out) or after the treated fabrics 5 have been subject to the step of bleaching wherein the dyes have been removed.

Advantageously, after step e) the treated fabrics 5 comprise cotton fibres with a degree of polymerization that can be as high as 3500. The product of the invention process does not include cellulose pulp. In other words, the fabrics including cotton yarns obtained from the process of the invention are still in the form of a fabric, although deprived of its initial polyester component.

A treated fabric 5 comprising cotton fibres 40 and deprived of the polyester fibres 4 is shown in figure 5b. A schematic view of treated fabric 5, in a form of garment 5a, comprising cotton fibres 40, from which polyester fibres 4 and non-fabric parts (zippers etc.) have been removed, is shown in figure 6b and a photo of a garment before (photo a) and after (photo b) a complete treatment including bleaching is shown in figure 9. Said garments, or fabrics (or yarns or fibers) are suitable, after an additional drying step, to be recycled to cotton fibers in a way known in the art, e.g. by a cotton waste opening line for re-spinning machines. Said recycled cotton fibers can be used to prepare recycled cotton yarns suitable for weaving.

The textiles may be dried in a way known per se, e.g. in a tumble dryer, or may be dried in a continuous drier such as, e.g., a belt conveyor drier.

As previously mentioned, waste fabrics 1 comprising optical brightening agents are subject to a pre-treating step of removing the optical brightening agents from the waste blend fabrics 1 with a solvent before carrying out the depolymerization step. Said removal comprises a bath ratio in the range of 1/2 to 1/20, preferably 1/10 at a temperature between 30 °C and 40 °C for a period of time between 10 minutes to 30 minutes. Advantageously the removal of the optical brighteners prevents the presence of spots of fibers having different optical properties in treated fabrics 5.

According to a preferred embodiment of the invention process, as shown in figure 7, the depolymerizing solution obtained after a depolymerization cycle is re-used in a subsequent depolymerization cycle of a fresh batch of textiles. Similarly, the bleaching solution and the washing solution may be stored in tanks 7a and 7b to be used again in further processes with the advantage of greatly reducing the consumption of water.

The invention is now further disclosed with reference to the following examples provided for merely illustrative and non-limiting purpose.

### EXAMPLE 1

*Before the process is applied,* a *waste fabric has* a *weight equal to 10 grams. The waste fabric comprises cotton fibres in the warp direction and cotton fibres, rayon fibres, polyester fibres and spandex fibres in the weft direction. Additionally, the waste fabrics is dyed with an indigo dye.*

*The recycling waste blend fabric is treated in a closed reactor with a depolymerization solution comprising sodium hydroxide (48 °Be) with a concentration of 90 g*/*L. The depolymerization solution is heated to reach a temperature of 130 °C and kept at said temperature for 120 minutes. The bath ratio is equal to 116. The depolymerization solution is circulated through the fabric.*

*After 120 minutes, the depolymerizing solution is cooled to a temperature of 40 °C. After the treatment of the waste fabrics with the depolymerization solution, polyester fibres are depolymerized into monomers and separate from the treated fabric.*

*The treated fabrics is subsequently treated with a bleaching solution. The bleaching solution comprises sodium hydroxide (48 Be°*) *with a* mass *concentration of 25 g*/*L, hydrogen peroxide with a mass concentration of 5 g*/*L, stabilizing agents in a concentration of 3.0 g*/*L, dispersing agents with a concentration of 1g*/*L and wetting agent with a concentration of 0.5glL.*

*Hydrogen peroxide is gradually poured in the bleaching solution after 5 minutes the treated waste fabric is immersed in the bleaching solution. The bleaching solution has a bath ratio of 1*/*8. The bleaching solutions is then heated to a temperature of 105 °C for 120 minutes and indigo dye is removed from the treated fabric.*

*In the final step the treated fabric is treated with a washing solution. The washing solution comprises dispersing agents (e.g. Develope JFR NB* - *MKS DEVO) with a concentration of 3 g*/*L. The bath ratio is equal to 1*/*8.*

*The washing solution is heated to a temperature of 95 °C for 30 minutes and the treated woven fabric is washed. The washed treated fabric is further subject to recycling processes known in the art.*

### EXAMPLE 2

*500 Kg of waste blend fabrics of different types are placed in the reaction chamber. The fabrics yarns comprise polyester filaments and cotton fibers and include warp and*/*or weft yarns that are indigo dyed.*

*The waste fabrics are treated with 3000 L of a depolymerization solution resulting in a bath ratio of 1*/*6. The depolymerizing solution comprises 90 g*/*L of a sodium hydroxide solution 48 °Be, i.e. with a concentration of about 43g*/*L of NaOH.*

*The depolymerization solution is heated to reach a temperature of 130 °C and kept at said temperature for a period of time of 120 minutes during which time the depolymerization solution is circulated by means of a pump through the fabrics. After 120 minutes the depolymerizing solution is cooled to a temperature of 50 °C. Part of the indigo dye is removed, i.e. detached, from the fabric fibers during the depolymerization step.*

*The depolymerized fabrics are subsequently treated with 4000 L of a bleaching solution resulting in a bath ratio of 1*/*8. The bleaching solution comprises sodium hydroxide (48 °Be) with a mass concentration of 25 g*/*L, hydrogen peroxide with a mass concentration of 5 g*/*L, stabilizers agents with a concentration of 3.0 g*/*L, dispersing agents with a concentration of 1g*/*L and wetting agents in a concentration of 0.5 g*/*L.*

*Hydrogen peroxide is gradually poured in the bleaching solution after 5 minutes the treated fabric is immersed in the bleaching solution. The bleaching solutions is therefore heated to a temperature of 105 °C for 120 minutes and indigo dye remaining on the fabrics after depolymerization is removed from the treated fabrics.*

*In the final step the treated fabrics are treated with a washing solution of 4000L resulting in a bath ratio of 1*/*8. The washing solution comprises dispersing agents (Permulsin FF) with a concentration of 3 glL. The washing solution is heated to a temperature of 95 °C for 30 minutes and the treated textiles are washed.*

*The washed and dried treated textiles are further subject to recycling processes known in the art.*

### EXAMPLE 3

*A woven fabric containing blend warp and weft yarns having a composition of 13% recycled polyester, 13% recycled cotton, 74% cotton was used. The yarns were indigo dyed with a concentration of 1. 11 % by weight of indigo in the fabric and were provided with sizing for 7% by weight.*

*5 kg of the fabric are treated with 33 liters of a depolymerizing solution comprising 90 g*/*L of a sodium hydroxide solution having 48° Be*. *The solution, heated at 130 °C, is circulated through the still fabrics in a closed reaction chamber for 120 minutes.*

*After a first cycle of treatment of the waste fabric with the depolymerization solution, mass concentration of the sodium hydroxide in the depolymerizing solution is equal to 55.84 g*/*L (48°Be), in the depolymerizing solution the depolymerized polyester - measured from the amount of terephthalic acid (TPA)* - *is 12.52 g*/*L and the concentration of indigo dye is 0.244 g*/*L. The treated fabric is then bleached and washed according to the conditions set in Example 1.*

*After the bleaching step, the depolymerized polyester in the bleaching solution is 4 g*/*L and after the washing step, the depolymerized polyester in the washing solution is 1.35 g*/*L. Therefore, after a depolymerization step, a bleaching step and a washing step the total amount of depolymerized polyester is equal to 17.87 g*/*L. Considering the amount of each solution inside the reaction chamber is equal to 33 L, the total amount of polyester removed from the waste fabric is equal to 589.71 g.*

*After the entire process (one batch cycle), the depolymerized, bleached and washed fabric is dried to measure its breaking and tearing strength. The Degree of Polymerization (DP) of the cotton fibers is calculated. As shown in Table 1, the breaking strength in the warp direction is 53.97 Kg, the breaking strength in the weft direction is 44.97 Kg, the degree of polymerization of the cotton fibers of the treated fabric is between 908-1636.*

*The depolymerizing solution obtained at the end of the first cycle is restored to the required content of NaOH and used to carry out a second depolymerization cycle on a second fresh batch of the same type of blend fabric used for the first cycle.*

*The same process is carried out in total four times for four batches of the same type of blend fabric, wherein for each cycle the mass concentration of the sodium hydroxide in the depolymerization solution is restored to 90 g*/*L.*

*After the fourth process, the depolymerized polyester in the depolymerization solution, calculated from the amount of terephthalic acid (TPA), has a mass concentration of 37.96 g*/*L. The mass concentration of indigo dye in the solution is 0.974 g*/*L. After four cycles, which, in other words, means that 4 new consecutive batches of 5 kg of the fabric have been treated with the same solution (after restoring NaOH content), the total amount of polyester removed from the 4 batches of 5 kg is equal to a cumulative amount of 2320.23 g.*

*The results are reported in the following Table 1, Table 2 and Table 3.*

**Table 1**

| Cycles | Breaking strength Warp (kg) ASTM 05034 | Breaking strength Weft (kg) ASTM D5034 | Tear Strength Warp (gr) ASTM D1424 | Tear strength Weft (gr) ASTM D1424 | Weight (gr/m2) ASTM D3776 unwashed | Viscosity (ml/g) ISO5351 (weft yarn) | Range of DP (weft yarn) | Viscosity and DP drop % (after bleaching and washing) |
|---|---|---|---|---|---|---|---|---|
| Untreated fabric | 94.2 | 69.27 | 8410 | 5167 | 411.6 | 1330.4 | 2060-2528 | --- |
| 1 st cycle (1st batch) | 53.97 | 44.97 | 3433 | 2103 | 315.2 | 861.2 | 1274-1636 | 35.3 |
| 2nd cycle (2nd batch) | 48.43 | 41.73 | 3656 | 2160 | 341.4 | 659.2 | 948-1252 | 50.5 |
| 3rd cycle (3rd batch) | 43.26 | 41 | 4616 | 2133 | 337.8 | 706.8 | 1024-1343 | 46.9 |
| 4th cycle (4th batch) | 45.97 | 43.47 | 4436 | 2266 | 341.9 | 691.6 | 1000-1314 | 48.0 |

**Table 2**

| Depolymerization cycles | Indigo concentration after depolymerization (g/L) |
|---|---|
| 1 st cycle - batch 1 | 0.244 |
| 2nd cycle - batch 2 | 0.584 |
| 3rd cycle - batch 3 | 0.742 |
| 4th cycle - batch 4 | 0.974 |

**Table 3**

| Cycles | depolymerized polyester (g/L) in 33 L of circulated solution after each step | | | | Total PES amount removed(g) | Total weight loss % |
|---|---|---|---|---|---|---|
| | depolymerization | bleaching | washing | Total | | |
| 1st cycle | 12.52 | 4.00 | 1.35 | 17.87 | 589.71 | 20.3* |
| 2nd cycle | 21.94 | 8.85 | 4.30 | 35.09 | 1157.97 | 20.3* |
| 3rd cycle | 31.59 | 13.81 | 7.17 | 52.57 | 1734.81 | 20.9* |
| 4th cycle | 37.96 | 21.30 | 11.05 | 70.31 | 2320.23 | 22.3* |
| *: from recycled polyester, sizing material and dyes | | | | | | |

*As visible in Table 1, the depolymerized and bleached fabrics maintain detectable mechanical properties; fibres breaking strength in the warp direction can reach 53.97 Kg and the breaking strength in the weft direction is 44.97 Kg. The degree of polymerization of the treated fabric can be as high as more than half of the original DP, even after bleaching and washing.*

*Table 2 shows the increase of the amount of indigo dye in the depolymerization solution that is used for all batches from cycle 1 (batch 1) to cycle 4 (batch 4); the indigo can eventually be recovered from the solution. The invention process is thus providing a method of recovering indigo dyes from a waste textile.*

*Table 3 shows the increasing amount of depolymerized polyester (g*/*L) from 33 L of a same circulated solution used in the 4 cycles. In each cycle a depolymerization step, a bleaching step and a washing step is applied to a new batch fabric. For each of the steps the amount of depolymerized polyester and the total amount of depolymerized polyester after depolymerization, bleaching and washing is provided. For each cycle the total cumulative amount of polyester removed from each batch of fabric is provided in grams.*

*The fabrics and textiles treated according to the invention process, i.e. textiles and fabrics from which the polyester portion has been removed through depolymerization, are therefore surprisingly suitable to become a secondary raw material for the production of yarns and fabrics.*

### Example 4 - comparison of DP drop using prior art conditions and conditions according to the invention

*The fabric used for Example 3 is cut in 30×30 cm pieces and is treated according to the teaching of example 8 of* WO 2019/140245*, i.e. with the parameters mentioned there 150°C, 1h, 5% (wlv) NaOH, with and without use of MeOH (WO trials 1 to 3) and then treated according to the process of the invention (Isko trials 2 and 3). The results are summarized in Table 4. The viscosity and DP of the cellulose in the original non-treated fabric and treated fabrics are reported and DP drop were calculated for the treated samples.*

**Table 4**

| DP | | | Viscosity | Viscosity | | Viscosity and DP drop↓ | PES(%) after process; % depolymerization |
|---|---|---|---|---|---|---|---|
| | | | (mPa.s) | (ml/g) | | | |
| Untreated fabric | original | | 109.1 | 1619 ml/g | 2559-3075 | | |
| **WO trial 1** 150 degC ***no stirring*** cut fabric | 1h | depolymerization | 34.5 | 1142 ml/g | 1740-2170 | 29.5% | **12.47; 1.8%** depolymerized |
| | 4h | depolymerization | 20.2 | 920 ml/g | 1370-1749 | 43.2% | **1.40; 89.0%** depolymerized |
| **WO trial 2** 150 degC 1h ***with stirring*** cut fabric | depolymerization | | 17.0 | 848 ml/g | 1252-1612 | 47.6% | 0; **100%** depolymerized |
| | fiber leftover | | 6.80 | 469 ml/g | 650-891 | 71.0% | |
| **WO trial 3** 150 degC 1h ***no stirring MeOH as co-solvent*** cut fabric | depolymerization | | 43.9 | 1242 ml/g | 1909-2361 | 23.3% | **11.86; 6.6%** depolymerized |
| **İSKO trial 2** 130 degC 2h cut fabric | depolymerization | | 36.0 | 1160 ml/g | 1770-2203 | 28.3% | 0; **100%** depolymerized |
| **İSKO trial 3** 130 degC 2h ***MeOH as co-solvent*** cut fabric | depolymerization | | 24.3 | 997 ml/g | 1498-1895 | 38.4% | 0; **100%** depolymerized |

*In the above example cut fabrics were used instead of whole garment of Example 6. In WO trials 1 to 3 the depolymerization parameters were set according to prior art process disclosed in Example 8 of WO'245 (150°C, 1h, 5% (wlv) NaOH, cut fabric). In Isko trials 2 and 3 the temperature was kept at 130°C and the solution was circulated through still fabric pieces according to the invention process. In WO trial 1 and 2 a reactor provided with a rotating drum for stirring the fabric pieces was used. The fabrics were kept stationary in trial 1 and stirred by rotation of the drum in trial 2. VVO trial 3 was carried out in stationary mode (no stirring). Methanol (10 %wlw) was used as co-solvent in WO trial 3 and Isko trial 3. Additionally, contrary to the examples of* WO 2019/140245 *that are silent concerning the DP (degree of polymerization) of the cotton fibers before the treatment, Table 4 also provides the DP value of the original cotton fibers and their DP after the depolymerization process.*

*According to observations in stationary mode, i.e., without stirring, of WO trial 1, after the process was applied for 1 hour (WO 1, 1h), only 1.8% of polyester is depolymerized. When the process is performed up to 4 hours in stationary mode (WO 1, 4h) the polyester amount on the fabric is measured as 1.40% with 89% depolymerization. Although the complete depolymerization of polyester part could not be achieved in 4-hour trial stationary mode, the DP of cellulose part shows a huge decrease as a DP drop of 43.2%. It is clearly seen that more than 4 hours reaction time is needed to completely depolymerize polyester in blended fabric when prior art parameters are applied in stationary mode. The longer time required to completely depolymerize polyester also results in a higher decrease of DP, which would be more than the 43.2% (result after 4h treatment).*

*In view of the results of WO trial 1, another trial was carried out* as *VVO trial 2 by adding to the conditions of WO trial 1 a stirring mode of the fabrics. The results show that under stirring depolymerization of polyester is achieved completely along with a remarkable decrease in cellulose DP in cut fabric, with a loss of fibers that separate from the fabric. DP of the separated fibers is shown as "fiber leftover" in Table 4 and is remarkably low. As visible from Table 4, after VVO trial 3 was conducted in the presence of methanol according to example 8 of WO'245, only6.6% of the initial amount of polyester is depolymerized even if the DP drop % of residual cellulose are seen not to be decreased much. In addition, the polyester present as core in cotton*/*polyester core-spun yarn inside the blended fabrics is not depolymerized completely.*

*Summarizing, when the process is performed according to the prior art conditions, a complete depolymerization of the polyester results in a high DP drop in the treated cotton fibers. Conversely, DP drop resulting from the tests Isko trial 2 carried out according to the invention is dramatically less and shown as 28.3% in Table 4. Isko trial 3 was carried out in the presence of MeOH 10% and was found to result in a higher DP loss than without MeOH.*

*Summarizing, the process of the invention results in complete depolymerization of the polyester and in a higher DP value (lower DP drop) of the cotton fibers obtained after depolymerization.*

### EXAMPLE 5 - depolymerization of indigo dyed fibers

*Indigo dyed cotton*/*polyester fibers, having a polyester content of about 4% by weight are treated according to the invention. More in detail, 5 kg of fibers are treated with 33 liters of a depolymerizing solution comprising 90 g*/*L of a sodium hydroxide solution having 48° Be. The solution, heated at 130 °C, is circulated through the fibers in a closed reaction chamber for 120 minutes. The fibers are in a still condition. After treatment of the fibers with the depolymerization solution according to Example 3, mass concentration of the Sodium Hydroxide in the depolymerizing solution is equal to 52.08 g*/*L (48°Be), the depolymerized polyester in the depolymerizing solution - measured from the amount of terephthalic acid (TPA) - is 5.38. g*/*L and the concentration of indigo dye is 1.63. g*/*L. The Degree of Polymerization of the cotton fibers is calculated. Results are shown in table 5.*

**Table 5**

| **Isko trial 1** | | Viscosity (mPa.s)* | Viscosity (ml/g) | DP calculated | DP% drop from original |
|---|---|---|---|---|---|
| **Indigo-dyed fiber** | | | | | |
| cotton/polyester (∼4%) | original | 116 | 1645 ml/g | 2604-3126 | |
| | depolymerization | 44.8 | 1250 ml/g | 1923-2375 | 24.0% |

*As can be observed from Table 5, after the depolymerization of the polyester, the DP loss in the cotton fibers is 24%.*

### EXAMPLE 6

*A garment (pants) made of 100% cotton fabric and including polyester in the form of sewing yarns (i.e., the only polyester in the garment is in the form of polyester sewing yarns) is used. Particularly, the 100% cotton garment is 75% virgin cotton and 25% recycled cotton. The garment is indigo dyed with a concentration of 1. 12% by weight of indigo in the garment.*

*The garments also included non-textile elements namely zippers, rivets, buttons. 5 kg of garments are treated with 33 liters of a depolymerizing solution comprising 90 g*/*L of a sodium hydroxide solution having* 48° Be. *The solution, heated at 130 °C, is circulated through the fabrics in a closed reaction chamber for 120 minutes.*

*The Degree of Polymerization of the cotton fibers is calculated. Results are shown in table 6.*

**Table 6**

| **Isko trial 4** | | | Viscosity (mPa.s) | Viscosity (ml/g) | DP calculated | DP% drop from original |
|---|---|---|---|---|---|---|
| **100% cotton, indigo dyed** | | | | | | |
| | Garment (pants) with polyester sewing lines | original | 345.7 | 2097 ml/g | 3406-3984 | |
| | | depolymerization | 71.8 | 1446 ml/g | 2259-2747 | 31.0% |

*As can be observed from Table 6, after the depolymerization of the polyester, the DP loss in the cotton fibers of a 100% cotton garment is 31%. The non-textile elements became detached from the garment and were removed from it as visible in* *figure 9**.*

## Claims

1. A process for recycling waste blend textiles (1) comprising polyester (4) and cellulosic fibres, preferably cotton staple fibres (40), the process including a depolymerization of the polyester in a basic aqueous solution, **characterized in** comprising the following steps:
a) providing an amount of said textiles in a reaction chamber (10);
b) providing an amount of basic depolymerization solution (3) according to a bath ratio between 1/2 and 1/20 by weight of textile over weight of solution;
c) circulating said amount of depolymerizing solution (3) through said textiles (1), to depolymerize said polyester (4) into corresponding monomers and to remove said polyester monomers from said textiles;
d) removing said depolymerizing solution (3) from said reaction chamber (10);
wherein the temperature of the said depolymerizing solution in step c) is in the range between 101 °C and 160 °C,
and wherein
e) the solution is circulated through said textiles to provide treated textiles (5) comprising cellulosic staple fibres, preferably cotton staple fibres (40), substantially free from polyester material.

2. The process according to claim 1, wherein said depolymerizing solution is an alkaline solution, preferably a solution comprising 70 g/L to 500 g/L of a solution of sodium hydroxide having a Baumé degree (°Be) in the range of 43 to 50 °Be, more preferably 76g/L to 120 g/L of a NaOH solution having 48 °Be.

3. The process according to any previous claim, wherein the depolymerizing solution has a bath ratio in the range of 1/2 to 1/20, preferably of 1/5 to 1/8.

4. The process according to any previous claim, wherein the temperature of said depolymerizing solution in step c) is in the range of 120 to 160°C, preferably 130 °C to 140 °C.

5. The process according to any previous claim, wherein the pressure inside said chamber (10) in step c) is in the range of 1.05 bar to 7.0 bar, preferably 2.7 bar to 7.0 bar, more preferably between 2.7 bar and 5.5 bar.

6. The process according to any previous claim, wherein step c) is carried out for a period of time in the range of 60 minutes to 240 minutes, preferably 91 minutes to 240 minutes, more preferably 100 minutes to 150 minutes, most preferably 120 minutes.

7. The process according to any previous claim, wherein said depolymerizing solution (3) hydrolyses reactive dyes present in reactive dyed textiles (1) and/or detaches part of indigo dyes from indigo dyed textiles.

8. The process according to any previous claim, further comprising a step of bleaching the wet treated textiles (5) as obtained after step e) in said chamber (10) by circulating a bleaching solution (30) comprising NaOH and an oxidizing agent, preferably hydrogen peroxide, through said treated textiles in said chamber (10), preferably said bleaching solution (30) has a bath ratio in the range of 1/2 to 1/20, more preferably 1/7 to 1/9, most preferably 1/8 by weight of waste textile to bleaching solution.

9. The process according to any previous claim, wherein said textiles fill the chamber so that they are not displaced in the chamber under the action of the flow of solution.

10. The process according to any previous claim, further comprising a step of washing the treated textiles (5) by means of a washing solution (80) preferably comprising dispersing agents to remove remaining TPA salts, wherein the bath ratio is in the range of 1/2 to 1/20, preferably 1/7 to 1/9, more preferably of 1/8 by weight of textiles to washing solution.

11. The process according to any previous claim, wherein the number of cycles the depolymerization solution is fed through textiles is in the range of 30 to 480 cycles per hour, preferably 50 to 400 cycles per hour, more preferably 60 to 300 cycles per hour, most preferably 70 to 300 cycles per hour.

12. The process according to any previous claim, wherein said waste textiles (1) comprise one or more optical brightening agents and wherein said process further comprises a step of removing said optical brightening agents from said textiles (1) before said depolymerization step.

13. The process according to any previous claim, wherein said textile is selected from fibres, yarns, fabrics and garments, preferably from fabrics and garments, said garments optionally comprising non-textile elements including zippers, buttons and rivets, wherein said non-textile elements are detached and removed from said garments after said process has been carried out.

14. The process according to any previous claim, wherein any of said depolymerizing solution, bleaching solution and washing solution is adjusted to its initial concentration and is re-used 1 to 100 times, preferably 10 to 100 times, more preferably 10 to 40 times in a subsequent depolymerizing, bleaching or washing cycle of a new batch of waste blend textiles.

15. A plant (100) to carry out a process of recycling waste textiles (1) comprising polyester fibres (4) and cellulosic staple fibres (40) according to any previous claim, **characterized in that** it comprises:
• A closable reaction chamber (10) configured to contain said waste textiles (1);
• at least one tank (7) to contain a depolymerizing solution (3) and optionally at least one of a plurality of tanks (7a,7b) to contain at least one of a bleaching solution (30), and a washing solution (80);
• a pump (8) to feed and circulate said depolymerizing solution (3) from said depolymerizing solution tank (7) to and through said chamber (10);
• means (90; 9a; 9b) to control the temperature of said depolymerizing solution (3) inside said chamber (10).

16. A plant according to claim 15, comprising a filtering basket (6), to house said textiles (1) in said chamber, said basket being removable from said chamber (10), preferably said chamber comprising at least one perforated separation element (60) housed in said basket (6) to maintain the textiles in a still condition.

17. A process for recycling waste textiles selected from garments and fabrics comprising polyester and cellulosic fibers, preferably cotton fibres, wherein said garment or fabric comprises fabric portions sewn together by sewing yarns, said fabric portions consisting of cotton yarns and/or cellulosic yarns, preferably 100% cotton fabric portions, said sewing yarns being polyester sewing yarns, the process including a depolymerization of the polyester yarns in a basic aqueous solution, comprising the following steps:
a) providing an amount of said textile in a reaction chamber;
b) providing an amount of said basic depolymerization solution according to a bath ratio in the range of 1/2 and 1/20, preferably 1/4 to 1/8, by weight of textile over weight of solution;
c) circulating said amount of depolymerizing solution through said textiles to depolymerize said polyester into corresponding monomers and to remove said polyester monomers from said textile;
d) removing said depolymerizing solution from said reaction chamber;
wherein the temperature of the said depolymerizing solution in step c) is in the range between 101 °C and 160 °C, and the textiles are in a still, i.e. static, condition and the solution is circulated through said garments or fabrics to provide treated garments comprising cellulosic staple fibers, preferably cotton staple fibres, substantially free from polyester material.

18. A process according to claim 17, wherein said garments comprise non-textile elements including zippers, buttons, labels and rivets, wherein said non-textile elements become at least partially detached from the garment during said process.

19. A process according to claim 17 or 18, further comprising the features of claim 2 and of any claim 4 to 14.

20. A polyester free fabric as obtainable with a depolymerization process of the polyester originally present in said fabric according to any claim 1 to 14, said polyester free fabric comprising cotton yarns provided with empty spaces within said yarns.

21. The fabric of claim 20, wherein the cotton fibers of said cotton yarns have a degree of polymerization between 600 to 3500 and such that said cotton fibers can be used for yarn production.
